# EUROPEAN PATENT APPLICATION

(11) **EP 1 617 656 A2**
(43) Date of publication of application: **18.01.2006**
(21) Application number: 05012914.7
(22) Date of filing: 15.06.2005
(51) Int. Cl.: H04N 5/445

(54) **Apparatus for displaying data broadcasting contents and method thereof**

(30) Priority: 16.07.2004 KR 2004055561
(71) Applicant: LG ELECTRONICS INC., Seoul (KR)
(72) Inventor: Kim, Jae Han, Chilgok-gun Gyeonsangbuk-do 718-702 (KP)
(74) Representative: Degwert, Hartmut

(57) **Abstract**

A method and apparatus for displaying data broadcasting contents, are provided. The method according to an embodiment includes determining if there is a change in data broadcasting contents, and notifying a user of the change if the determining step determines that there is a change in the data broadcasting contents.

## Description

This application claims the priority benefit of Patent Application No. 10-2004-0055561 filed in Republic of Korea on July 16, 2004, which is hereby incorporated by reference.

### BACKGROUND OF THE INVENTION

### Field of the Invention

The present invention relates generally to the management of data broadcasting contents, and more particularly to an apparatus for displaying data broadcasting contents and a method thereof that can display updated contents efficiently in accordance with the characteristic(s) of the contents and in accordance with the type of data broadcasting service involved when the data broadcasting contents are updated.

### Description of the Related Art

Data broadcasting holds an important part in digital broadcasting, and bears the character of a single program service such as an HDTV or SDTV program. At present, in the countries throughout the world, the data broadcasting has been commercialized under the standards of MHEG/MHP of DVB (Digital Video Broadcasting), XML of DASE (DTV Application Software Environment), BML of ARIB (Association of Radio Industries and Business); etc.

There are many types of data broadcasting services. One is an EPG (Electronic Program Guide) that basically provides schedules of respective channel programs. Additionally, among the data broadcasting service types, an independent service is a data broadcasting service from a service provider that independently provides services such as recent news, weather information, security information, traffic information, travel information, living information, education information, etc., irrespective of the contents of programs being played. A side-channel service provides information related to the programs being played, for example, information about characters, background music, locations, clothes of actors, etc. in case a drama program is being played; information about detailed information, explanation of terms, on-the-spot travel information, etc. in case a documentary program is being played; and information about game records, personal information of participating athletes, types of games, etc. in case a sport program is being played on a display device. Meanwhile, an interactive type service provides information in an interactive manner such as games, votes, home banking, teleshopping, remote education, etc. using bi-directional communications.

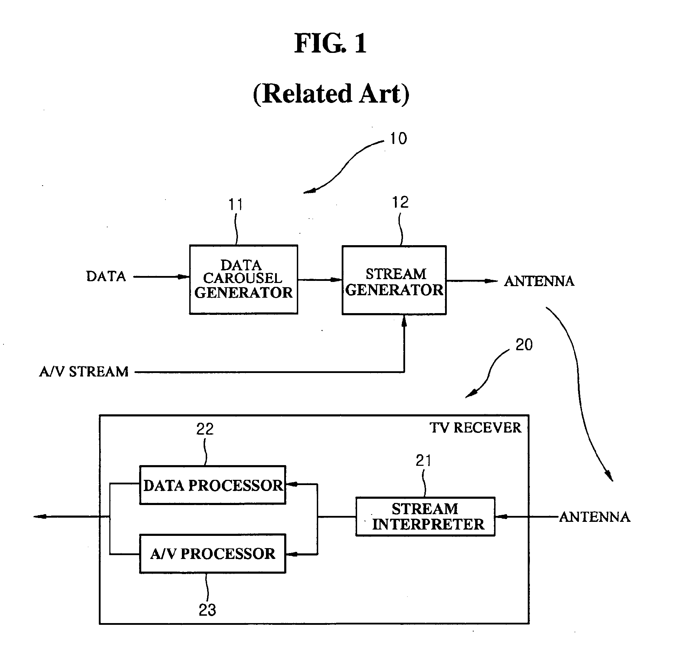

FIG. 1 is a view illustrating a process of transmitting and receiving data broadcasts according to a related art. At a transmitter side 10 of data broadcasting contents, data provided by a data broadcasting service provider is transmitted to a stream generator 12 through a data carousel generator 11. The data carousel means an independent data set periodically and/or repeatedly transmitted through a broadcasting channel or a method of periodically repeating the transmission of the data set through the broadcasting channel. The transmission of the data carousel from the data carousel generator 11 to the stream generator 12 follows a DMS-CC (Digital Storage Media Command and Control) protocol. The DSM-CC is a protocol that provides the standard for command and control among various kinds of digital storage media that are appliances for storing and transmitting digital information. The stream generator 12 creates a transfer stream by combining A/V (Audio/Video) streams transmitted through different signal paths, and radiates the transfer stream through an antenna.

At a receiver side 20 of the data broadcasting contents, the transfer stream signal transmitted from the contents transmitter side 10 is received through an antenna, and then RF-transmitted to a television (TV) receiver. A stream interpreter 21 of the TV receiver analyzes the received signal, and transmits a data component of the stream signal to a data processor 22 and an A/V component to an A/V processor 23, so that the respective data and A/V components are properly processed and then displayed on a screen.

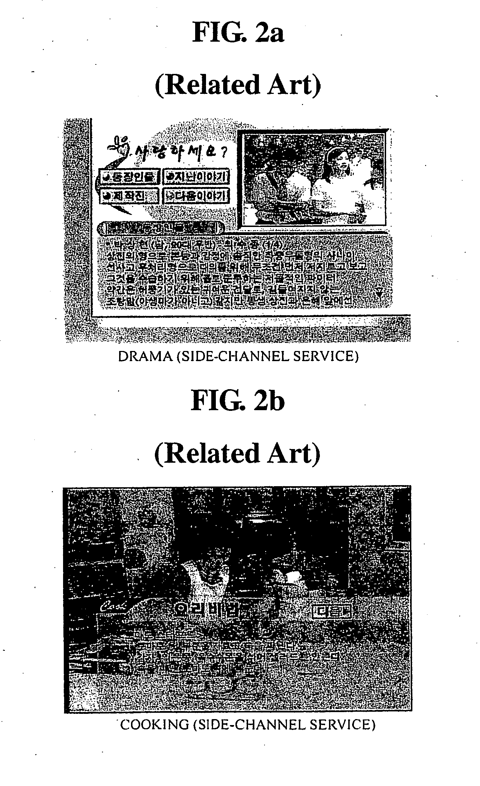

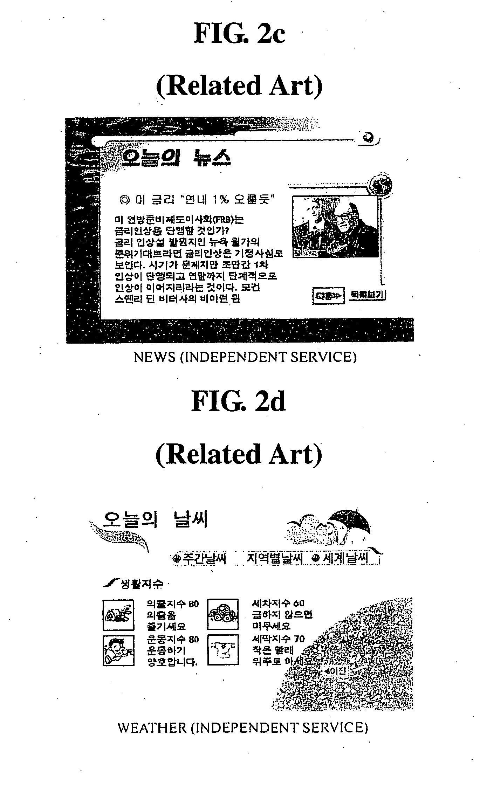

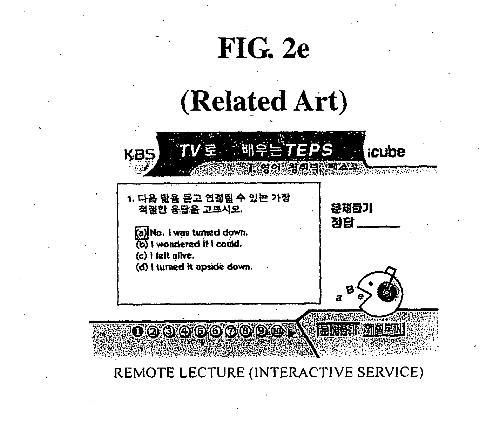

FIGs. 2a to 2e are views illustrating examples of different types of data broadcasting services according to the related art. Specifically, FIG. 2a illustrates a drama program being played on a display screen, along with information on characters in the drama program as a side-channel service; FIG. 2b illustrates a cooking program currently being played on a screen, along with an overlaid display (side-channel service) of text specifying how to cook a meal being cooked in the cooking program; FIG. 2c illustrates a display of news as a kind of independent service; FIG. 2d illustrates a display of weather information as another kind of independent service; and FIG. 2e illustrates a display of the contents of a remote lecture as a kind of interactive type service.

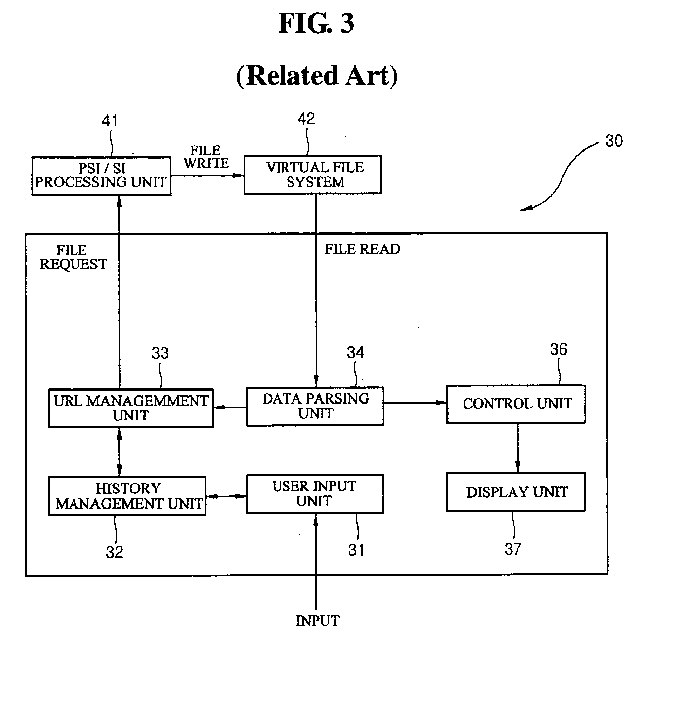

FIG. 3 is a block diagram illustrating the construction of a data broadcasting XML browser according to a related art. The data broadcasting XML browser 30 includes a user input unit 31 for receiving a user's input, a data parsing unit 34 for converting an XML document/file read from an outside into a form that can be easily used by an application program and recording a filename and URL in anchor and image tag in a URL management unit 33, a control unit 36 for editing the parsed data as XML pages, and a display unit 37 for displaying the XML pages as a result of the edition on a display screen. The XML browser also includes the URL management unit 33 for managing filenames linked with anchors and image tags and URLs transmitted from the data parsing unit 34, and a history management unit 32 for managing page navigation such as forward/backward movement through mutual communications with the user input unit 31. The URL management unit 33 and the history management unit 32 communicate with each other.

Now, a process of displaying data broadcasting contents according to the related art will be explained.

If a user's input is received from an outside through the user input unit 31 of the XML browser 30, the history management unit 32 and the URL management unit 33 request a file to a data broadcasting service provider (not illustrated). Contents provided from the data broadcasting service provider are processed through a PSI/SI processing unit 41 according to a PSI/SI protocol that is the standard provided to describe programs of a digital TV, data and various information required for the TV reception, and then the processed contents are transmitted to a virtual file system 42 in the form of a file. The data parsing unit 34 of the XML browser 30 parses the data read from the virtual file system 42, and sends the parsed data to the URL management unit 33 and the control unit 36. The control unit 36 edits and sends the XML pages to the display unit 37, and the display unit 37 displays the edited XML pages.

Recently, with the increase in the amount of data broadcasting contents provided as the data broadcasting is activated, it is difficult to manage the data contents and it becomes harder for a user to search for desired information in the data contents. For example, in the case of the data broadcasting currently broadcast in Japan, a large number of depths (e.g., menu layers) are provided to access data broadcasting contents. But this causes the user to make a large number of key manipulations in order to obtain the desired information. If the information desired by the user is located behind the contents repeatedly appearing without any change, the user has no choice but to continuously see the repeatedly-appearing contents in order to view the user's desired information. For instance, the user must go through certain menu pages to get to a particular menu page providing the user's desired information.

In view of the characteristics of the contents according to the type of data broadcasting service selected by the user, the information such as EPG, which may be the broadcasting station's own information, is always sent from broadcasting stations with their contents almost not changed. Accordingly, whenever the user makes an input to view a particular data broadcast, the user has to view or pass through certain contents every time even though the user is interested in only the particular data broadcast.

Additionally, the independent service may display the same information for a long time. For example, in the case of the weather information (see FIG. 2d), the weather for a day almost has fixed data information, and thus once a user views the weather information by, e.g., selecting data broadcasting keys, the same user is unlikely to view the weather information again subsequently. As a result, even if the weather information does change due to the approach of a typhoon or an abrupt weather change, the user, who recognizes that the weather information for a given day is always the same, would not make a key input to view the weather information again, and thus will miss an important weather change information. Also, if there are many depths or hoops to pass through in order for the user to view the desired information, the user might not make the key inputs to access the desired information since it is time consuming and inconvenient to the user.

According to the related art method and apparatus as described above, the data broadcasting contents receiver side cannot and does not periodically discriminate whether the updated contents exist in the received data broadcasting contents data, but can only display all the received data broadcasting contents in the order of their receipt. Accordingly, the user has to continuously monitor the data broadcasting contents and personally figure out if any new information is provided in the displayed data broadcasting contents. Further, the user is required to make a large number of key manipulations to reach the desired data broadcasting contents due to the existing menu structure, which is inconvenient and cumbersome.

Accordingly, in order to efficiently manage displaying and accessing of data broadcasting contents, schemes for mitigating a user's inconvenience caused by the repeated viewing of unnecessary information and for rapidly searching for necessary information among the data broadcasting contents are now in demand.

### SUMMARY OF THE INVENTION

The present invention is directed to an apparatus for displaying data broadcasting contents and a method thereof that substantially obviate the above or other problems associated with the limitations and disadvantages of the related art.

It is an object of the present invention to provide an apparatus for displaying data broadcasting contents and a method thereof that can display updated contents by periodically comparing newly received data broadcasting contents with reference data broadcasting contents in order to enable a user to easily and quickly view the updated data broadcasting contents whenever they are updated.

According to an aspect of the present invention, whether or not the contents are updated can be determined by comparing the data broadcasting contents with reference data at each set interval time. Reference data may differently be set in accordance with the contents characteristics of an independent or side-channel service according to the type of data broadcasting service.

It is another object of the present invention to provide an apparatus for displaying data broadcasting contents and a method thereof that can simplify a user's key manipulation required for the user to reach his/her desired information among the data broadcasting contents. For example, the number of key manipulations required for the user to obtain desired information can be reduced by jumping directly to a page in which updated information is located and displaying the updated information. This direct jumping to the page in which the updated information is located can greatly reduce the number of key manipulations in comparison to the related art method of displaying a set sequence of pages of the received data.

It is another object of the present invention to notify a user of a change in the data broadcast contents using, e.g., an OSD, an icon, a pop-up window, etc., so that the user knows when new data broadcast contents are available for viewing by the user at the user's discretion.

In another aspect of the present invention, there is provided a method of displaying data broadcasting contents, the method comprising: determining if there is a change in data broadcasting contents; and notifying a user of the change if the determining step determines that there is a change in the data broadcasting contents.

In another aspect of the present invention, there is provided a method of displaying data broadcasting contents, the method comprising: storing, as reference data, data broadcasting contents received at a reference time; comparing data broadcasting contents received after the stored data broadcasting contents, with the reference data; and displaying updated data broadcasting contents based on the comparison result.

In another aspect of the present invention, there is provided a method of displaying data broadcasting contents, the method comprising: modifying a display order of menu items associated with data broadcasting contents according to update information in the data broadcasting contents.

In another aspect of the present invention, there is provided an apparatus for displaying data broadcasting contents, the apparatus comprising: a controller to determine if there is a change in data broadcasting contents, and to notify a user of the change if there is a change in the data broadcasting contents.

In another aspect of the present invention, there is provided an apparatus for displaying data broadcasting contents, the apparatus comprising: a storage to store, as reference data, data broadcasting contents received at a reference time; a controller to compare data broadcasting contents received after the stored data broadcasting contents, with the reference data; and a display unit to display updated data broadcasting contents based on the comparison result.

In another aspect of the present invention, there is provided an apparatus for displaying data broadcasting contents, the apparatus comprising: a controller to modify a display order of menu items associated with data broadcasting contents according to update information in the data broadcasting contents.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view illustrating a process of transmitting and receiving data broadcast contents according to a related art;
FIGs. 2a to 2e are views illustrating examples of different types of data broadcasting services according to a related art;
FIG. 3 is a block diagram illustrating the construction of a data broadcasting browser according to a related art;
FIG. 4 is a block diagram illustrating the construction of a data broadcasting browser according to the present invention;
FIGs. 5a and 5b show two different examples of an update alert indication according to the present invention;
FIG. 6 is a flowchart illustrating a method for displaying data broadcasting contents for an independent service according to an embodiment of the present invention; and
FIG. 7 is a flowchart illustrating a method for displaying data broadcasting contents for a side-channel service according to an embodiment of the present invention; and
FIGs. 8a and 8b illustrate examples of menu structure for explaining a method for displaying data broadcasting contents according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

There are various standards for displaying data broadcasting contents. For example, the American type DASE adopts and uses XML as the standard, the European type DVB adopts and uses MHEG or MHP as the standard, and ARIB independently developed in Japan adopts and uses BML as the standard. Here, XML, BML, etc., indicate the standard or tool for a picture display such as an OSD display. In the discussion of the present invention, the XML standard is adopted as an example only and the present invention is not limited to that standard and can be applied to other standards.

The present invention has been developed, in part, to provide a scheme for enabling the user to directly view updated contents without passing through a large number of depths. According to an aspect of the present invention, this scheme involves periodically discriminating whether the updated contents exist in the received data and displaying the updated contents if the updated contents exist in the data broadcasting contents receiver side. According to another aspect of the present invention, the user is notified of the existence of updated contents and by a single action such as selecting an icon or a key, the updated contents are immediately displayed to the user. In the present invention, a different type of update discrimination process may be performed by contents characteristics according to the type of data broadcasting service involved.

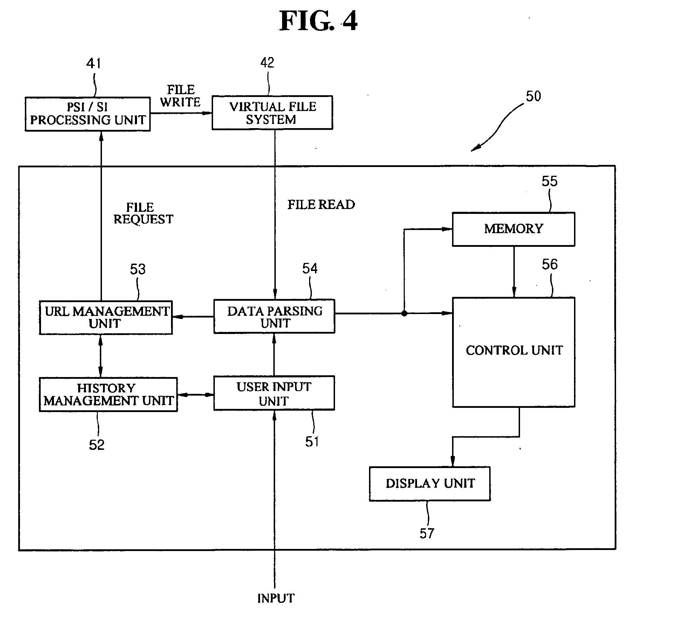

FIG. 4 is a block diagram illustrating the construction of a data broadcasting browser 50 according to an embodiment of the present invention. Unlike the browser of FIG. 3, the data broadcasting browser 50 according to the present invention has a user input unit 51 and a data parsing unit 54 connected with each other, and if a user's input is made to the input unit 51, the data parsing unit 54 can discriminate and parse the user input data. Data such as data broadcasting contents parsed by the data parsing unit 54 is stored in a memory 55 or other storage as reference data. Then, subsequent data such as newly received data broadcasting contents following the reference data is parsed by the data parsing unit 54 and is used as input data to be compared with the reference data. The control unit 56 compares the input data with the reference data stored in the memory 55. If the input data is equal to the reference data as a result of the comparison, the control unit 56 determines that updated contents (i.e., any new contents) do not exist. If the input data does not equal the reference data, the control unit 56 determines that updated contents exist. If the updated contents do not exist, the control unit 56 processes the incoming pages (data broadcasting contents) in the order of their receipt for display. If the updated contents exist, the control unit 56 rearranges the pages so that the page having the updated contents is arranged as a leading (first) page so that the system can directly and quickly access the leading page and display it to the user.

Additionally, if the updated contents exist, the control unit 56 controls the display unit 57 to provide an update alert indication for indicating that the updated contents exist. In one example, as the update alert indication, an OSD, a warning sign/text, or an icon can be displayed on the screen of the display unit 57 that notifies the user of the existence of the updated data broadcasting contents. In this case, such an indication can flicker for a certain time duration during which the user can select the indication, which in turn causes the updated contents or a full-notice pops up to be displayed on the screen. In another example, the alert indication can be a pop-up window displaying the actual updated contents without a separate warning indication. In this case, the pop-up of the actual updated contents as displayed to the user provides the updated contents to the user and at the same time functions as the alert indication. Other examples are possible.

In response to the update alert indication, if a user's input for requesting the display of the updated contents is made, the control unit 56 controls the display unit 57 to display the updated contents/page, while if the updated contents do not exist, the control unit 56 controls the display unit 57 to display the incoming pages in the order of their receipt.

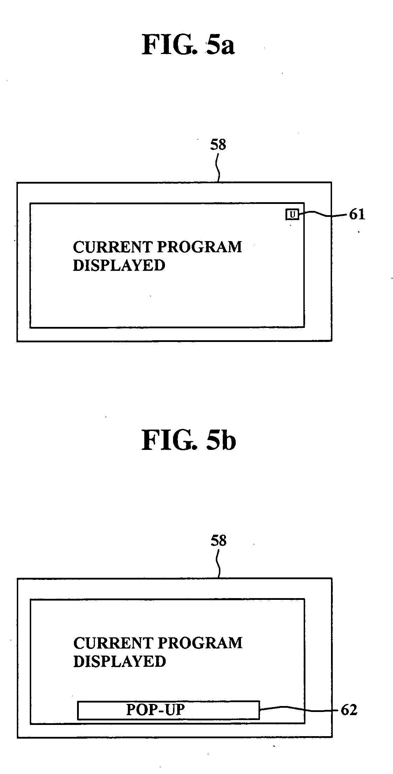

Regarding the update alert indication, it can be positioned at any designated area on the screen. For instance, as shown in FIG. 5a, the alert indication in the form of a sign 61 (e.g., "U" for update) can be displayed at a corner of a screen 58 of the display unit 57, or as shown in FIG. 5b, the alert indication in the form of a pop-up window 62 can be displayed at a bottom area of the screen 58. The window 62 can have an alert notice pertaining to the existence of the updated contents or can display directly the updated contents. In FIG. 5a, if the user selects the sign/icon 61, then the updated contents are displayed on the screen 58, e.g., in a pop-up window.

According to an embodiment of the present invention, the user can pre-configure the display unit 57 so that the user can set the manner (e.g., OSD, pop-up window, etc.) in which the alert indication is provided to the user.

According to another embodiment of the present invention, along with the visual display of the alert indication, an audio alert may be provided, which would be beneficial in cases when the screen is turned on but the user is not paying attention to the screen.

According to another embodiment of the present invention, changed data/texts among the displayed broadcasting contents are emphasized to the user on the screen. For instance, the changed or new texts in the updated contents (which may include some old contents) can be highlighted or displayed in a different color so that the viewer can quickly recognized which information is new/changed and which information is old among the displayed updated broadcasting contents.

Next, methods of updating contents by content characteristics according to the type of data broadcasting service involved will be explained according to the present invention. These steps can be implemented in the device of FIG. 4 or other suitable device or system.

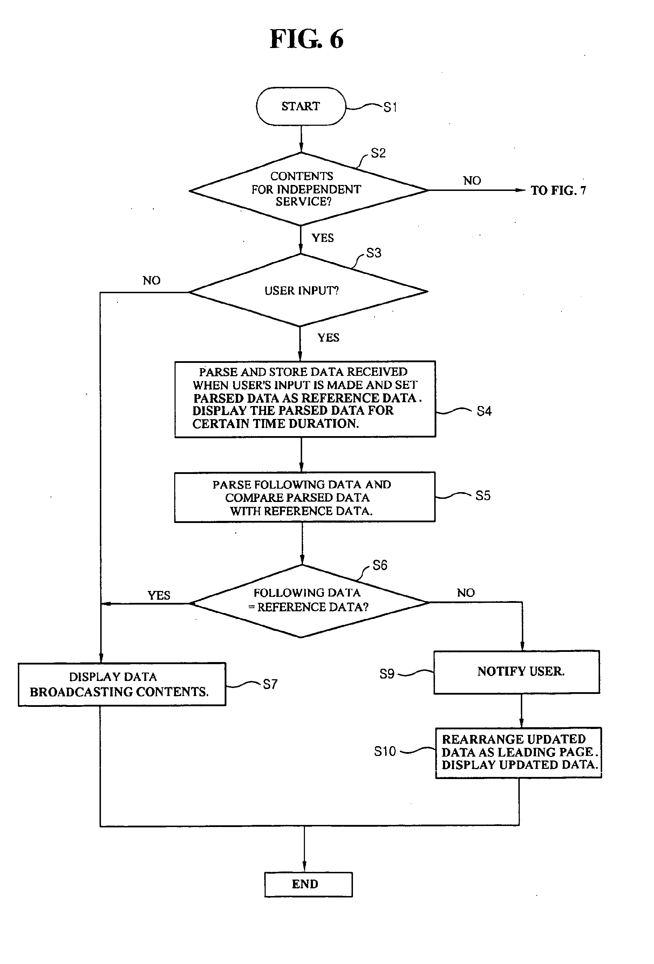

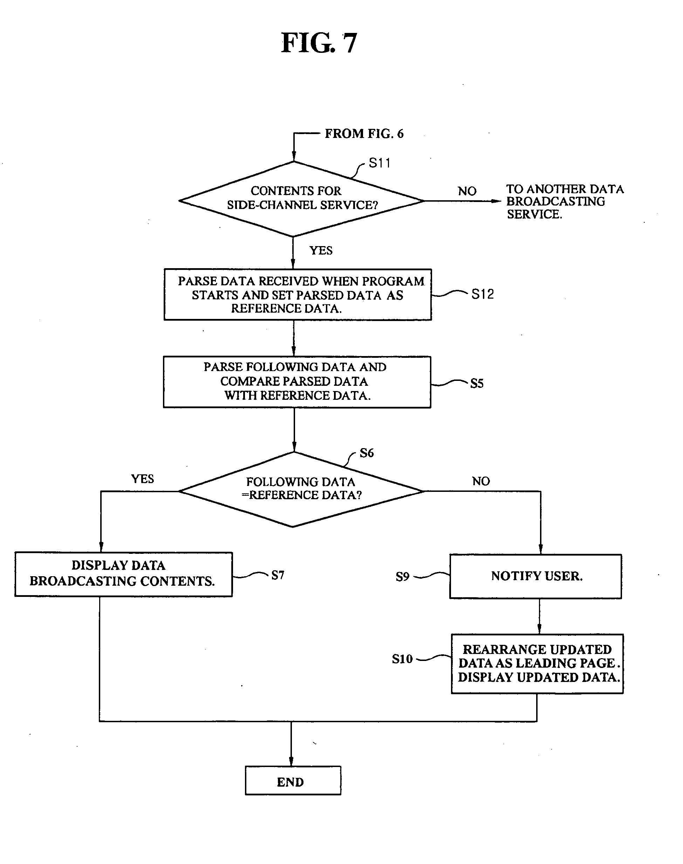

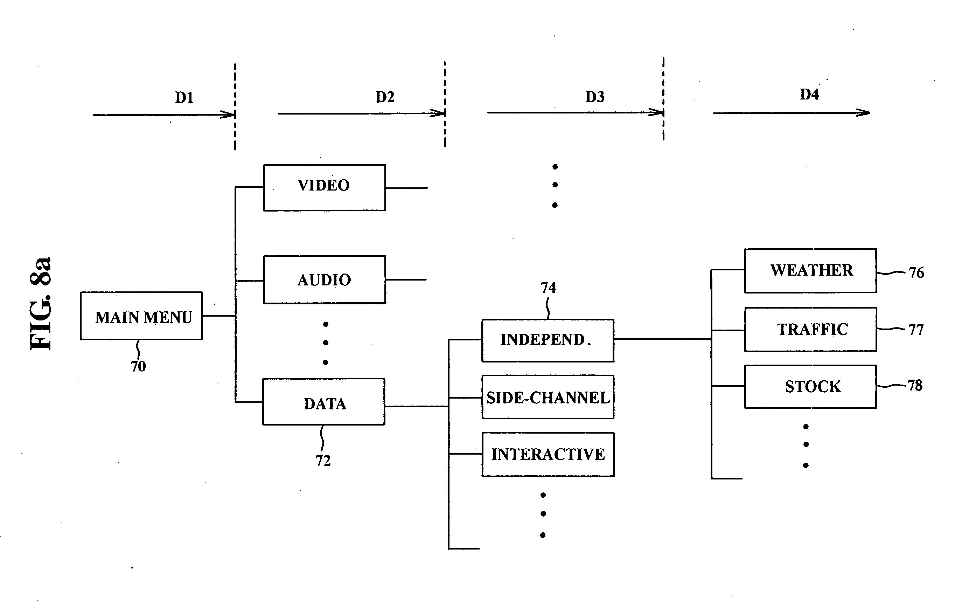

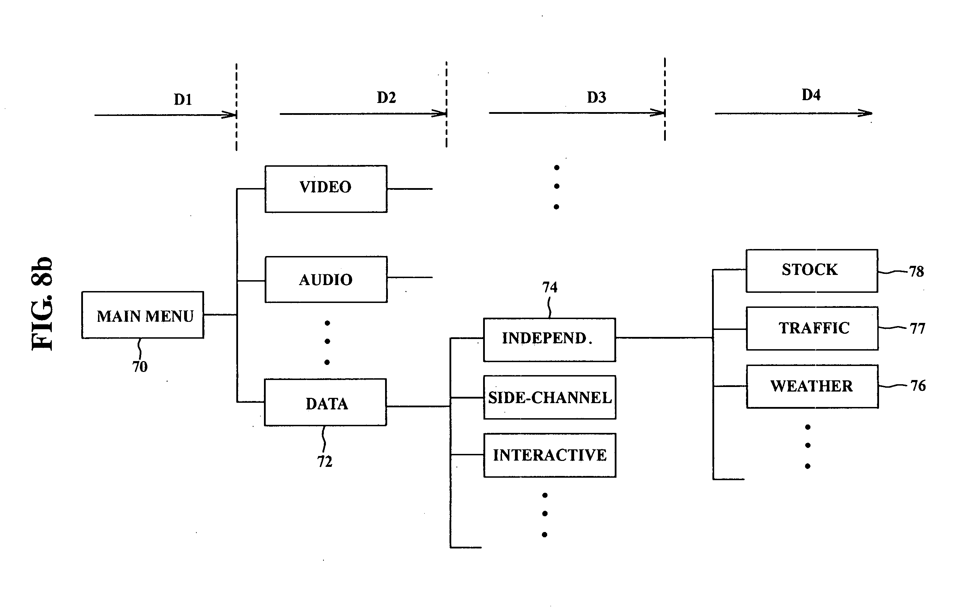

Before these methods are explained, it should be understood that a user can pre-select or change a type of service the user is interested in. For example, a list of different services may be displayed on a menu page for a user's selection. An example of such menu page(s) is shown in FIGs. 8a and 8b (to be discussed later). Once the user selects a particular service, the user can further select one or more of the different categories of that service. For instance, if the user selects an independent service to be provided to him, then a new menu page showing a list of different categories of independent service (e.g., news, traffic, stock, etc.) may be displayed for the user's selection. In addition, the user can turn on or off an updated contents display mode in which the methods of FIGs. 6 and 7 are performed.

Now, a method of updating the contents for an independent service will be explained. The contents for the independent service have characteristics in that they have relatively a low degree of change in a day. Accordingly, the time when an initial data broadcasting key is input by the user is set to be a reference point. That is, when the user makes, e.g., to the input unit 51, an input requesting data broadcasting, data broadcasting contents received at that time or associated with that time of the user input is stored as reference data. Thereafter, data (e.g., data broadcasting contents) received after a specified time from that time of the user input is parsed and then compared with the stored reference data, e.g., by the control unit 56. If it any changed data exists as a result of the comparison, the update alert indication as discussed above is displayed. At this time, if the user presses an update key or selects the alert indication, the page (e.g., XML) having the updated data broadcasting contents is directly read and displayed on the display unit 57.

More specifically, FIG. 6 is a flowchart illustrating the method of updating the data broadcasting contents for an independent service. Referring to FIG. 6, if the data broadcasting starts (step S1), it is determined whether the service of the data broadcasting contents is an independent service (step S2). If it is, then the method proceeds to step S3; otherwise, it proceeds to the method of FIG. 7. At step S3, if a user makes an input requesting a display of data broadcasting contents (e.g., via a menu or designated key), data (e.g., data broadcasting contents) received when the user's input is made is parsed and stored as reference data (step S4). At the same time, the parsed data (i.e., the data broadcasting contents) is displayed to the user for a certain time duration and may disappear automatically or per the user's request. That is, when the user first requests to activate data broadcasting on the screen, the data broadcasting contents as they are received are displayed to the user, but then the display of the contents may be stopped.

Thereafter, the following data (i.e., data broadcasting contents following the stored data broadcasting contents (reference data)) is parsed and compared with the reference data (step S5) to discriminate whether the following data is the same as the reference data (step S6). This step is to determine if there are any changes (updates) in the data broadcasting contents as they are received by the browser 50. For instance, after a specified time has elapsed from the time when the reference data is captured, the data broadcasting contents (the following data) currently received may be compared with the reference data. If the following data is equal to the reference data (which means no updated contents are present), then the data broadcasting contents as they are received are displayed on the display unit 57 in the order of their receipt (S7).

If, however, the following data is not equal to the reference data at step S6, the user is notified of the existence of the updated contents (e.g., by displaying the update alert indication as discussed above) at step S9. Then the updated contents are processed so that a page containing the updated contents is rearranged to be a top or leading page and this page is displayed at step S10. Here, the display of the updated contents (or page) may be automatic or triggered by a user input.

In this way, the user does not need to continuously view and monitor data broadcasting provided as an independent service to obtain any new or updated data broadcasting contents. Instead, the user can view any program and if the update alert indication is displayed while the user is viewing the current program, the user can select the update alert indication to view the updated data broadcasting contents. Thus, by a single action (e.g., selecting the update alert indication), the user can instantaneously and directly view the updated contents, which is an efficient and advantageous way to display updates in the data broadcasting.

Next, a method of updating the contents for a side-channel service will be explained according to the present invention. The contents for the side-channel service have characteristics in that they have different data (e.g., data broadcasting contents) according to the broadcasting programs currently being displayed. Accordingly, the time when a broadcasting program starts is set to be a reference point for collecting data broadcasting contents to be stored as reference data. That is, on the basis of the display start time of the broadcasting program on the display unit, data broadcasting contents for or associated with that start time are stored in the memory as reference data. At the same time, the same data broadcasting contents are displayed on the display unit. This display may be made for only a certain time duration.

Thereafter, data broadcasting contents received subsequently after a specified time are parsed and then compared with the stored reference data. If it is determined that any changed data exists in the data broadcasting contents as a result of the comparison, then the user is notified of the existence of the update information in the data broadcasting content, e.g., by displaying the update alert indication to the user. At this time, the user can press the update key or other designated key or perform other designated action, which in turn causes the updated information (e.g., in an XML page) to be directly read and displayed to the user. In the alternative, both the update alert indication and the actual updated contents may be displayed simultaneously and/or automatically to the user.

More specifically, FIG. 7 is a flowchart illustrating this method of displaying the data broadcasting contents for a side-channel service according to an embodiment of the present invention. Referring to FIG. 7, if the service of the data broadcasting contents involved is a side-channel service (step S11), data broadcasting contents received when a broadcasting program starts (e.g., when the display of the user-selected broadcasting program begins or at the beginning of the user-selected broadcasting program itself) is parsed and stored in the memory 55 or other storage unit as reference data (step S12). That is, one of the differences between the method for the independent service and the method for the side-channel service is when to capture data broadcasting contents among the incoming data broadcasting contents to store them as the reference data. Once the reference data is stored, steps S5, S6, S7, S9 and S10 discussed in connection with FIG. 6 are performed. The detailed discussion of these steps is omitted since the same steps are used in both FIGs. 6 and 7 and the description of such steps has been already provided above in connection with FIG. 6.

In the methods of FIGs. 6 and 7, according to an embodiment the user can identify a list of favorite categories of a service, which would then be stored in the system. Then the system monitors each of these favorite categories of the data broadcasting contents and alert the user when any of the favorite categories has updated information. For instance, an icon having a letter 'N' may be displayed as the update alert indication to indicate that there are news updates, or an icon having a letter 'S' may be displayed to indicate that there are stock updates. In another embodiment, only the category of service selected by the user to activate the service is monitored and the alert indication of only that category is displayed.

The method of displaying data broadcasting contents according to the present invention is also applicable to other types of data broadcasting services. For instance, if it is applied to displaying data broadcasting contents for an interactive type service, then the point of capturing the reference data may be when the interactive communication/display starts. Other scenarios are possible.

In all these embodiments, at steps S5 and S6, the steps of obtaining the following data and comparing it with the reference data may be repeated at each set time interval or any other designated time points. In this manner, the term "following data" refers to data broadcasting contents received by the system at each designated time point. For instance, if the set time interval is 10 minutes, then the system compares, with the reference data, data broadcasting contents received after 10 minutes have elapsed since the reference data has been captured, and repeats this process in every 10 minutes to monitor the presence of any new or changed information (updates) in the incoming data broadcasting contents. According to an embodiment, the user is able to set how often these comparisons may occur. For instance, a menu or pop-up window can be provided to the user so that user can enter/ select a user-preferred time interval or other time points. In this way, the update alert indication and updates can be provided to the user according to the user-preferred intervals.

In the above, each 'following data' is always compared with the same reference data stored in step S4 or S12. However, according to another embodiment, the step of capturing the reference data may be performed periodically or at set time interval so that each following data is compared with different reference data at different times. For instance, after each comparing step S6 has been completed, the system can be configured to store the 'following data' used in step S6 as new reference data, which would then be compared with the next following data in the next cycle of step S6. This aspect of the invention permits the system to monitor any change between the data from the last update check time and the data in the current update check time.

FIGs. 8a and 8b illustrate two examples of menu structure for explaining a method of displaying data broadcasting contents using menus according to an embodiment of the present invention. This method can be implemented in the system of FIG. 4 or other device / system.

The menu structure shown in FIG. 8a has a number of depths (D1-D4 as an example), where each depth is generally a menu page, but can be a menu branch in a menu page. When a user desires to adjust settings associated with viewing video/audio/data, the user operates keys or other selecting means to maneuver through this menu structure. In FIG. 8a, depth D1 indicates a main menu stage 70, which the user may enter by selecting a menu key or other designated key (e.g., on a remote controller, a key pad, or a keyboard). The next stage at depth D2 provides menu items including VIDEO, AUDIO, DATA (72)..., which the user may enter by selecting a menu item (e.g., "SETTINGS") from the main menu stage 70. To adjust setting associated with data broadcasting contents, the user can select the DATA menu item 72 to enter the next stage (D3). At depth D3, menu items associated with data broadcasting contents are displayed, which may include types of services available such as INDEPENDENT service (74), SIDE-CHANNEL service, INTERACTIVE service, etc. Then the user can select one of the services to enter the next stage (D4) in which the user can further select a category of the selected service. For instance, if the user selects the INDEPENDENT service menu item 74, then a list of menu items identifying a different categories of that service are displayed and the different categories of the independent service may include WEATHER 76, TRAFFIC 77, STOCK 78, and so on.

According to this embodiment, the system is configured to continuously or periodically monitor the existence of update/change in the incoming data broadcasting contents by using the comparing steps discussed above, and to change the order in which the menu items (e.g., menu items 76, 77, 78...) is displayed based on the monitoring result. For instance, the control unit 56 monitors the input data broadcasting contents and controls the display unit 57 to modify the display order of the menu items. In one example, the category which currently has updated contents is displayed on top of all other categories. In this way, the user can quickly notice which category has new information and can also quickly select the top menu item among all other listed menu items to access the new information.

For clarity, as an example only, if the STOCK category 78 in FIG. 8a currently has updated data broadcasting contents, then the STOCK category menu item 78 is displayed to be the first item in the list as shown in FIG. 8b. In addition or in the alternative, the menu item identifying the category with the updated contents can be highlighted to visually alert the user. The system monitors the incoming data broadcasting contents periodically or at set time points so that the menu structure as displayed is changed continuously to indicate the presence of updates in the incoming data broadcasting contents. In this way, when the user view the menu page as shown at depth D4, the top menu item displayed on the menu page will always have been the one that currently has the updated data broadcasting contents. If two or more categories have updates when the system checks the data broadcasting contents at a given time, then the display order may be based on previous display order or some other criteria.

The method of FIGs. 8a and 8b may be used in conjunction with any of the methods of displaying data broadcasting contents discussed above. For instance, if the user desires to select or change a particular category of a service associated with the data broadcasting, then the menu scheme of FIGs. 8a and 8b can be used. Once the user selects the category, then the scheme of providing the update alert indication and others as discussed above in connection with FIGs. 6 and 7 may be used.

As described above, according to the present invention, since the alert notice for indicating the existence of the updated contents is displayed to the user when the data broadcasting contents are updated, the user can more quickly and easily recognize that the updated contents exist. Additionally, since the page in which the update information exists can be directly displayed, e.g., by the user's single action of selecting the alert notice, key manipulation is simplified, which provides convenience to the user.

Moreover, according to the present invention, since the update is performed by content characteristics according to the type of data broadcasting service, the update display can be achieved to suit the characteristics of the respective contents and service.

In the above, the XML standard is adopted as an example. However, other data broadcasting standards such as BML may be adopted. Additionally, in the content characteristics according to the type of data broadcasting service, the present invention may be applied to the contents for other data broadcasting services in addition to the independent service and the side-channel service as described above.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A method of displaying data broadcasting contents, the method comprising:
determining if there is a change in data broadcasting contents; and
notifying a user of the change if the determining step determines that there is a change in the data broadcasting contents.

2. The method of claim 1, wherein the notifying step includes:
displaying an alert indication on a display device.

3. The method of claim 2, wherein the alert indication is one of the following: an OSD, an icon, a text indication, or a pop-up window.

4. The method of claim 2, wherein in the displaying step, the alert indication flickers for a certain time duration.

5. The method of claim 2, wherein the displaying step displays the alert indication adjacent to or over a program currently displayed on the display device.

6. The method of claim 2, further comprising:
displaying either a description of the change or changed information in the data broadcasting contents in response to a user's selection of the alert indication.

7. The method of claim 1, wherein the user selects a manner in which the user is notified of the change in the notifying step.

8. The method of claim 1, wherein the determining step includes:
checking for a change in each of the user's favorite categories of the data broadcasting contents; or
checking for a change only in a previously selected category of the data broadcasting contents.

9. The method of claim 1, further comprising:
displaying changed information in the data broadcasting contents once the change is detected.

10. The method of claim 9, wherein the changed information is displayed in a different color or as highlighted.

11. The method of claim 1, further comprising:
modifying a display order of menu items associated with the data broadcasting contents according to changed information in the data broadcasting contents.

12. The method of claim 11, wherein the display order of the menu items is
periodically modified.

13. The method of claim 11, wherein the menu items identify different categories of a service associated with the data broadcasting contents.

14. A method of displaying data broadcasting contents, the method comprising:
storing, as reference data, data broadcasting contents received at a reference time;
comparing data broadcasting contents received after the stored data broadcasting contents, with the reference data; and
displaying updated data broadcasting contents based on the comparison result.

15. The method of claim 14, wherein the comparing step includes:
comparing data broadcasting contents received at each set interval time point, with the reference data.

16. The method of claim 15, wherein the storing step periodically stores newly received data broadcasting contents as the reference data.

17. The method of claim 14, further comprising:
notifying a user of an existence of the updated data broadcasting contents before the displaying step.

18. The method of claim 17, wherein the notifying step notifies the user of the existence of the updated data broadcasting contents by displaying an alert indication in one of the following forms: an OSD, an icon, a text indication, or a pop-up window.

19. The method of claim 14, wherein in the storing step, the reference time is set according to a type of a data broadcasting service selected for displaying the data broadcasting contents.

20. The method of claim 19, wherein if the type of the data broadcasting service selected is an independent service, then the reference time is set to be a time when a user's input for requesting a start of the independent service is made.

21. The method of claim 19, wherein if the type of the data broadcasting service selected is a side-channel service, then the reference time is set to be a time when a broadcasting program starts.

22. A method of displaying data broadcasting contents, the method comprising:
modifying a display order of menu items associated with data broadcasting contents according to update information in the data broadcasting contents.

23. The method of claim 22, wherein the modifying step includes:
monitoring the data broadcasting contents periodically; and
modifying the display order of the menu items periodically based on the monitoring result.

24. The method of claim 22, wherein the menu items identify different categories of a service associated with the data broadcasting contents.

25. An apparatus for displaying data broadcasting contents, the apparatus comprising:
a controller to determine if there is a change in data broadcasting contents, and to notify a user of the change if there is a change in the data broadcasting contents.

26. An apparatus for displaying data broadcasting contents, the apparatus comprising:
a storage to store, as reference data, data broadcasting contents received at a reference time;
a controller to compare data broadcasting contents received after the stored data broadcasting contents, with the reference data; and
a display unit to display updated data broadcasting contents based on the comparison result.

27. An apparatus for displaying data broadcasting contents, the apparatus comprising:
a controller to modify a display order of menu items associated with data broadcasting contents according to update information in the data broadcasting contents.
